# EUROPÄISCHE PATENTSCHRIFT

(11) **EP 1 879 154 B1**
(45) Veröffentlichungstag und Bekanntmachung des Hinweises auf die Patenterteilung: **18.03.2020**
(21) Anmeldenummer: 07013113.1
(22) Anmeldetag: 04.07.2007
(51) Int. Cl.: B42D 15/00, B44F 1/02, G03H 1/04, G03H 1/02, B42D 25/425, B42D 25/455, B42D 25/324

(54) **Verfahren zur Herstellung eines Sicherheitselements**
Method for manufacturing a security element
Procédé de fabrication d'un élément de sécurité

(30) Priorität: 13.07.2006 DE 102006032679
(43) Veröffentlichungstag der Anmeldung: 16.01.2008
(73) Patentinhaber: Giesecke+Devrient Currency Technology GmbH, 81677 München (DE)
(72) Erfinder: Hoffmüller, Winfried, Dr., 83646 Bad Tölz (DE); Dichtl, Marius, Dr., 81371 München (DE); Renner, Patrick, Dr., 83677 Reichersbeuern (DE)

(56) Entgegenhaltungen:
- EP-A2- 1 527 902
- WO-A1-00/50250
- WO-A1-2004/072378
- DE-A1- 4 404 128
- US-A- 5 743 981

## Beschreibung

Die Erfindung betrifft ein Verfahren zur Herstellung eines Sicherheitselements für ein Sicherheitspapier, Wertdokument oder dergleichen mit einem Substrat, das zumindest teilweise mit einer zumindest zwei Schichten umfassenden Beschichtung versehen ist.

Es ist bekannt, in Sicherheitspapieren oder Wertdokumenten, wie beispielsweise Banknoten, Wertpapieren, Ausweiskarten oder anderen fälschungsgefährdeten Papieren, Sicherheitselemente in Form von z. B. Fäden oder im Wesentlichen nicht lang gestreckten, flächigen Elementen (Patches) vorzusehen. Diese Sicherheitselemente weisen zumindest ein, häufig mehrere Sicherheitsmerkmale, wie beispielsweise ein Hologrammelement oder ein Druckdesign, auf.

Im Sinne der Erfindung bezeichnet "Sicherheitspapier" das unbedruckte Papier, das neben einem erfindungsgemäßen Sicherheitselement weitere Echtheitsmerkmale, wie im Volumen vorgesehene Lumineszenzstoffe, einen Sicherheitsfaden oder dergleichen, aufweisen kann. Es liegt üblicherweise in quasi endloser Form vor und wird zu einem späteren Zeitpunkt weiterverarbeitet.

Als "Wertdokument" wird ein Dokument bezeichnet, das für seinen bestimmungsgemäßen Gebrauch fertiggestellt ist. Dabei kann es sich beispielsweise um ein bedrucktes Wertpapier, wie eine Banknote, Urkunde oder dergleichen, eine Ausweiskarte, einen Pass oder ein sonstiges eine Absicherung benötigendes Dokument handeln.

Der Begriff "Wertgegenstand" umfasst neben Wertdokumenten auch Markenartikel und dergleichen.

Die als Sicherheitsmerkmale eingesetzten Mikrostrukturen, wie insbesondere optisch variable Strukturen, werden üblicherweise in einen Prägelack eingeprägt. Im Rahmen der vorliegenden Anmeldung umfasst der Ausdruck "optisch variable Struktur" neben Hologrammen auch hologrammähnliche Beugungsstrukturen, also beispielsweise Strukturen, die kein definiertes Bild, sondern einen verschwommen farbigen Eindruck erzeugen. Ebenso unter dem Ausdruck "optisch variable Struktur" subsummiert werden Beugungsmuster, Strukturen mit Farbkippeffekt, Kinoforme, Strukturen mit einem Mikrolinseneffekt, Strukturen mit isotropen oder anisotropen Streuungseffekten oder mit anderen Interferenzeffekten.

Ein zum Einprägen einer Mikrostruktur und insbesondere zum Einprägen einer optisch variablen Struktur in ein Sicherheitselement geeigneter Prägelack muss verschiedene Anforderungen erfüllen. Der Prägelack muss prägbar, metallisierbar, flexibel und releasefähig sein. Zusätzlich sollte er einen gewissen Korrosionsschutz für die Metallisierung bieten.

Die genannten Anforderungen können aber von keinem Prägelack alle gleichzeitig in idealer Weise erfüllt werden. So sind besonders flexible Formulierungen in der Regel nicht gut metallisierbar und oft nicht ausreichend releasefähig. Um guten Korrosionsschutz zu gewährleisten, darf die Formulierung auch bei mechanischer Beanspruchung nicht brechen. Auch sind sehr flexible Lacke unter normalen Härtungsbedingungen an der Oberfläche oft klebrig und daher nicht wickelbar.

Um alle geforderten Eigenschaften möglichst weitgehend zu erfüllen, werden Beschichtungen verwendet, die aus mehreren verschiedenen Schichten bestehen. Die einzelnen Schichten verleihen der Beschichtung dann jeweils bestimmte gewünschte Eigenschaften. Aus der DE 10 2004 035 979 A1 ist beispielsweise eine solche aus mehreren Schichten bestehende Beschichtung bekannt. Zur Herstellung der kompletten Beschichtung werden sukzessive die einzelnen Schichten auf ein Substrat aufgetragen, wobei jede Schicht vor der Auftragung der nächsten darüberliegenden Schicht gehärtet wird.

Daneben ist aus der DE 20 2004 019 437 U1 ein mehrschichtiges optisches Sicherungselement bekannt, bei dem zumindest für eine Schicht ein UVvernetzbarer Replizierlack verwendet werden kann. Auch in diesem Fall werden nacheinander die einzelnen Schichten der Beschichtung auf ein Substrat aufgetragen und jede Schicht vor der Auftragung der nächsten darüberliegenden Schicht ausgehärtet.

Solche herkömmlichen Multischichtsysteme weisen aber den Nachteil auf, dass die prägbare Schicht, die zur Einprägung von z. B. einem Hologramm als Sicherheitsmerkmal vorgesehen ist, mindestens ca. 2,5 µm dick sein muss, damit ungewollte Unebenheiten im Prägewerkzeug, z. B. eine Schweißnaht, ausgeglichen werden können. In diesem Zusammenhang ist anzumerken, dass typische Prägetiefen für Hologramme im Bereich von 100 nm bis 400 nm liegen und für andere mikrooptische Prägestrukturen bis zu 20 µm betragen können. Entsprechend dick muss die prägbare Schicht dann mindestens sein. Durch eine derart dicke Schicht werden aber zahlreiche Eigenschaften des Gesamtverbunds beeinflusst, was sich negativ auf Flexibilität, Metallisierbarkeit und Releasefähigkeit auswirkt. Außerdem ist die Haftung zwischen den einzelnen Schichten nicht immer in der gewünschten Beständigkeit sichergestellt.

Die WO 2004/072378 A1 beschreibt ein Sicherheitspapier zur Herstellung von Wertdokumenten, z.B. Banknoten, mit einem flächigen Substrat, das mit einer Schmutz abweisenden Schutzschicht versehen ist, wobei die Schutzschicht auf zwei Lackschichten basiert, nämlich einer ersten unteren Lackschicht, die physikalisch trocknend ist, und einer zweiten oberen Lackschicht, wobei die obere Lackschicht bevorzugt eine UV-vernetzende Lackschicht ist.

Ausgehend davon liegt der vorliegenden Erfindung die Aufgabe zugrunde, ein Verfahren zur Herstellung eines Sicherheitselementes bereitzustellen, das die Nachteile des Standes der Technik vermeidet. Insbesondere soll ein Verfahren zur Herstellung eines Sicherheitselements zur Verfügung gestellt werden, durch das Mikrostrukturen und insbesondere optisch variable Strukturen mit verbesserter Beständigkeit hergestellt werden können.

Diese Aufgabe wird durch das Verfahren zur Herstellung eines Sicherheitselements mit den Merkmalen des Hauptanspruchs gelöst. Weiterbildungen der Erfindung sind Gegenstand der abhängigen Ansprüche.

Nach der Erfindung wird ein Sicherheitselement für ein Sicherheitspapier, Wertdokument oder dergleichen mit einem Substrat hergestellt, wobei das Substrat zumindest teilweise mit einer zumindest zwei Schichten umfassenden Beschichtung ausgestattet ist. Das erfindungsgemäße Verfahren umfasst die Schritte Aufbringen einer ersten Schicht auf das Substrat, Aufbringen von zumindest einer zweiten Schicht auf die erste Schicht, wobei vor dem Aufbringen der zweiten Schicht keine vollständige Härtung der ersten Schicht erfolgt, Prägen von zumindest einer Schicht der Beschichtung und Härten der Beschichtung.

Das zentrale Element der vorliegenden Erfindung stellt die Idee dar, einen mehrschichtigen Prägelack, der zur Einprägung einer Mikrostruktur und insbesondere zur Einprägung einer Struktur mit einem optisch variablen Effekt als Sicherheitsmerkmal geeignet ist, so auf ein Substrat aufzubringen, dass zunächst sämtliche Schichten ohne bzw. ohne vollständige Zwischentrocknung übereinander angeordnet und dann geprägt werden. Die vollständige Härtung der Beschichtung erfolgt erst nach dem Prägen. Erfindungsgemäß ist es allerdings auch denkbar, dass beim Prägeschritt, während des Kontakts zwischen Prägelack und Prägewerkzeug, bereits eine teilweise Härtung der Beschichtung erfolgt. Aber auch in diesen Fall erfolgt die vollständige Härtung erst nach dem Prägeschritt.

Solche im Nass-zu-Nass-Verfahren erzeugten mehrschichtigen Beschichtungen sind zwar im Zusammenhang mit der Beschichtung von Druckpapier aus dem Stand der Technik, wie beispielsweise der WO 2006/035234 A2, bekannt, die Auftragung eines mehrschichtigen Prägelacks auf ein Substrat wurde bisher aber mit einem Nass-zu-Nass-Verfahren nicht durchgeführt.

Durch das erfindungsgemäße Verfahren kann jede Schicht an eine bestimmte Funktion, wie Release-Fähigkeit, Flexibilität oder Kratzbeständigkeit, optimal angepasst werden. Additive können gezielt in der Schicht eingesetzt werden, in der sie jeweils gebraucht werden. Dadurch kann ein gutes Prägeverhalten erzielt werden, ohne die Überdruckbarkeit der Beschichtung zu gefährden.

Bei einem 3-Schichtsystem kann beispielsweise die erste Schicht mit einem mittleren Vernetzungsgrad ausgestattet werden, wodurch ein problemloser Release vom Trägermaterial bei der Weiterverarbeitung und eine gute Kratzbeständigkeit an der späteren Oberfläche erreicht werden. Die zweite Schicht kann hochflexibel und dehnfähig formuliert werden. Die dritte Schicht kann mit sehr guten Eigenschaften im Hinblick auf Prägbarkeit und Metallisierbarkeit ausgestattet werden. Durch die Wahl einer geringen Schichtdicke für die dritte Schicht wird beispielsweise erreicht, dass der gesamte Verbund auch bei hoher Härte und Vernetzung der dritten Schicht nicht spröde wird.

Durch die Ausstattung der einzelnen Schichten mit individuellen Eigenschaften wird eine Gesamtbeschichtung bereitgestellt, die alle für einen Prägelack gewünschten Eigenschaften aufweist. Dadurch wird z. B. auch die mechanische Beständigkeit der Beschichtung deutlich verbessert und eine verbesserte Schweißbeständigkeit nach Knittern erreicht. Unter Schweißbeständigkeit wird im Rahmen dieser Erfindung im Wesentlichen die Beständigkeit oder Haltbarkeit einer Reflexionsschicht verstanden, die für die Sichtbarkeit der Prägestrukturen, insbesondere der Beugungsstrukturen, verantwortlich ist. In vielen Fällen handelt es sich bei der Reflexionsschicht um eine z. B. aufgedampfte Metallschicht aus z. B. Aluminium, Kupfer, Chrom, Eisen oder Legierungen dieser und anderer Metalle. Bei der Ermittlung der Schweißbeständigkeit wird nun die Beständigkeit der Reflexionsschicht gegenüber menschlichem Schweiß bestimmt. Dies wird durch entsprechende auf die Reflexionsschicht einwirkende Bedingungen, wie hohe Luftfeuchtigkeit, saure bzw. basisch eingestellte salzhaltige, wässerige Lösungen von z. B. NaCl, KCl, CuSO₄, etc. erreicht, die die korrosive Wirkung von menschlichem Schweiß zeitlich beschleunigt nachstellen.

Beim erfindungsgemäßen Auftrag der einzelnen Schichten ohne vorherige vollständige Aushärtung der jeweils vorangegangenen Schicht kommt es in gewissem Umfang zu einer diffusionsgetriebenen Vermischung an den Grenzflächen der Schichten. Dieser Vorgang wirkt sich sehr positiv auf die Zwischenschichthaftung aus und führt im Ergebnis zu einer weiter verbesserten Zwischenschichthaftung. Allerdings sollte beachtet werden, dass sich die auf das Trägersubstrat aufgebrachten unterschiedlichen Lackschichten vor dem Prägen und Härten nicht zu stark durchmischen. Besonders negativ wäre eine vollständige Mischung aller Schichten. Beim Auftragen der Lackschichten vor dem Prägen sollten daher turbulente Verwirbelungen der Lackschichten vermieden werden.

Ein weiterer sehr wichtiger Vorteil ergibt sich aus der Tatsache, dass die Prägung über mehrere Schichten erfolgen kann. Dies bedeutet, dass die Prägung nicht nur auf die primär für die Prägung vorgesehene Schicht beschränkt ist. Im Gegensatz dazu muss bei den aus dem Stand der Technik bekannten Beschichtungen die Prägeschicht stets so dick sein wie die vorgesehene Prägetiefe. Ungewollte Unebenheiten im Prägewerkzeug, z. B. eine Schweißnaht, müssen gemäß der vorliegenden Erfindung nicht durch eine besonders dicke Prägeschicht ausgeglichen werden.

Da es bei der Prägung zu einer Deformation des gesamten Schichtverbundes kommt, könnte im Rahmen der Prägung aber eine Vermischung der Schichten auftreten. In diesem Fall kann durch geeignete Vorhärtung der Verbund soweit angeliert werden, dass eine ungewollte Vermischung vermieden wird. Die beschriebene Ausführungsform mit einer geeigneten Vorhärtung der Schichten ist von der Erfindung umfasst, da erfindungsgemäß vor dem Aufbringen der zweiten Schicht lediglich keine vollständige Härtung der ersten Schicht erfolgen soll.

Gemäß einer bevorzugten Ausführungsform der vorliegenden Erfindung wird außerdem vor dem Aufbringen einer dritten Schicht keine vollständige Härtung der zweiten Schicht durchgeführt.
Besonders bevorzugt sind daneben Ausführungsformen, bei denen weitere Schichten über der dritten Schicht aufgebracht werden, wobei vor dem Aufbringen der einzelnen Schichten keine vollständige Härtung der jeweils zuvor aufgebrachten Schicht erfolgt.

Als weiterer Vorteil des erfindungsgemäßen Verfahrens ergibt sich die Tatsache, dass der gesamte Schichtverbund in einem Schritt ausgehärtet werden kann, wodurch Arbeitsschritte und damit Zeit und Kosten eingespart werden. Eine Härtung der Beschichtung nach dem Prägen kann bei Bedarf aber auch in mehreren Schritten durchgeführt werden. Die einzelnen Schichten brauchen dazu nur mit geeigneten Photoinitiatoren ausgestattet zu werden.

Die Auftragung der einzelnen Schichten in dem erfindungsgemäßen Verfahren kann durch verschiedene an sich aus dem Stand der Technik bekannte Beschichtungsverfahren erfolgen. Infrage kommt jede Art von Beschichtungsverfahren, durch das mehrere unterschiedliche Lacke übereinander ohne Zwischentrocknung aufgetragen werden können. Neben einigen Druckverfahren, z. B. Tiefdruck, Flexodruck, Offsetdruck, kommen alle klassischen Verfahren zum Filmgießen und Beschichtungsverfahren infrage. So ist die Aufbringung z. B. mit Walzenbeschichtungsverfahren, Spaltbeschichtungsverfahren, Drahtrakelbeschichtungsverfahren, Slot Die Coating, Dip Coating, Spray Coating, Curtain Coating und Air Knife Coating möglich.

Eine Vorrichtung, mit der ein Auftragen der verschiedenen Schichten auf ein Substrat im Sinne der Erfindung durchgeführt werden kann, wird von der Firma Polytype Converting SA, Fribourg, Schweiz, unter der Bezeichnung "vertikale Walzen-Auffließvorrichtung" vertrieben.

Die Aushärtung der erfindungsgemäßen Beschichtung insgesamt und auch die Aushärtung jeder einzelnen Schicht kann durch die aus dem Stand der Technik bekannten Verfahren erfolgen. Bevorzugt wird die Härtung durch Bestrahlung mit ultraviolettem Licht durchgeführt. Ebenfalls möglich ist eine Elektronenstrahlhärtung.

Gemäß einer bevorzugten Ausführungsform der Erfindung wird daher die in der Beschichtung enthaltene strahlenvernetzbare Komponente durch ultraviolette Strahlung oder durch einen Elektronenstrahl vernetzt. Vom spektralen Bereich her sind Eisen-dotierte Strahler besonders gut geeignet. Alternativ können Strahler mit undotiertem Quecksilber (Hg) oder Strahler mit Gallium(Ga)-Dotierung verwendet werden. Hg-Strahler weisen allerdings einen etwas ungünstigeren Spektralbereich auf, während Ga-Strahler eine schlechtere Oberflächenhärtung bewirken.

Gemäß einer weiteren bevorzugten Ausführungsform enthalten einzelne oder alle Schichten der Beschichtung einen Photoinitiator oder eine Photoinitiatorkombination. Die Vernetzung kann mithilfe eines Photoinitiators bzw. einer Photoinitiatorkombination auf besonders einfache Weise gestartet und kontrolliert werden. Bevorzugte Beispiele solcher Photoinitiatoren sind in nachfolgender Tabelle angeführt:

| Produktname | Hersteller | chemische Bezeichnung/ nähere Spezifikation |
|---|---|---|
| Darocur® 4265 | Ciba Specialty Chemicals | Mischung aus 50 % 2,4,6-Trimethylbenzoyl-diphenylphosphinoxid und 50 % 2-Hydroxy-2-methyl-1-phenyl-propan-1-on |
| Darocur® 1173 | Ciba Specialty Chemicals | 2-Hydroxy-2-methyl-1-phenyl-propan-1-on |
| Irgacure® 500 | Ciba Specialty Chemicals | Mischung aus 50 Gew.-% 1-Hydroxycyclohexylphenylketon und 50 Gew.-% Benzophenon |
| Irgacure® 184 | Ciba Specialty Chemicals | 1-Hydroxycyclohexylphenylketon |
| Irgacure® 250 | Ciba Specialty Chemicals | Iodonium, (4-Methylphenyl)[4-(2-methylpropyl)phenyl]-, hexafluorophosphat |
| Esacure KIP 100 F | Lamberti | Mischung aus Oligo [(2-Hydroxy-2-methyl-1-[4-(1-methylvinyl)phenyl]propanon] und 2-Hydroxy-2-methyl-1-phenyl-1-propan-1-on |
| Irgacure® 2959 | Ciba Sepecialty Chemicals | 1-[4-(2-Hydroxyethoxy)-phenyl]-2-hydroxy-2-methyl-1-propan-1-on |
| Lucirin® TPO | Bayer | 2,4,6-Trimethylbenzoyl-diphenylphosphinoxid |
| Darocure® TPO | Ciba Specialty Chemicals | 2,4,6-Trimethylbenzoyl-diphenylphosphinoxid |
| Genocure™ ITX | Rahn | Isopropylthioxanthon |
| Omnirad ITX | IGM Resins Inc. | Isopropylthioxanthon |
| UVI-6992 | Dow Chemical Company | Mischung aus Triarylsulfoniumhexafluorophosphat-Salzen und Propylencarbonat |
| UVI-6976 | Dow Chemical Company | Mischung aus Triarylsulfoniumhexafluoroantimonat-Salzen und Propylencarbonat |

Die einzelnen Lackschichten können jeweils geeignet pigmentiert sein, wobei berücksichtigt werden muss, dass eine ausreichende UV-Transparenz des Gesamtsystems zur UV-Härtung gewahrt bleiben muss. Gemäß einer weiteren bevorzugten Ausführungsform der Erfindung sind daher in einer oder mehreren der Schichten der Beschichtung Pigmente enthalten. Besonders bevorzugt sind Ausführungsformen, in denen die einzelnen Schichten der Beschichtung jeweils unterschiedliche Pigmente enthalten. Bei den eingesetzten Pigmenten kann es sich z.B. um an sich aus dem Stand der Technik bekannte Farbpigmente oder um sogenannte Interferenzschichtpigmente handeln, die bei einem Betrachter einen betrachtungswinkelabhängigen Farbeindruck hervorrufen.

Bei der Anwendung des Prägeverfahrens zur Erzeugung farbiger Mikrotexte kann z. B. nur die Lackschicht gefärbt/pigmentiert sein. Durch die erhöhte Gesamtschichtdicke und die damit verbundene Möglichkeit, die Prägung über mehrere Schichten zu erstrecken, kann auch mit einem tiefen Prägewerkzeug geprägt werden, ohne Störungen durch Lufteinschlüsse zu erhalten.

Das Auftreten von Lufteinschlüssen stellt allgemein ein Problem bei der Herstellung von Sicherheitselementen dar. Insbesondere bei hohen Bahngeschwindigkeiten an der Oberfläche der Prägung kann es zu Lufteinschlüssen kommen, da die Luft nicht schnell genug aus dem Prägespalt entweichen kann. Dadurch kommt es zu einem Verlust an Farbkontrast. Die Lösung dieses Problems kann zum einen durch die Verwendung einer Schicht mit niedriger Viskosität als oberster Schicht des Sicherheitselements erfolgen. Die hauptsächliche Lackverdrängung bei der Prägung findet dann in dieser Schicht statt, wodurch ein guter Kontrast erzeugt wird. Gemäß einer weiteren bevorzugten Ausführungsform der Erfindung weist die oberste Schicht des Sicherheitselements daher eine niedrige Viskosität auf.

Ein anderer Weg zur Vermeidung von Lufteinschlüssen in einer pigmentierten Schicht ist es, nicht die oberste, sondern die darunterliegende Schicht zu pigmentieren. Da die Lufteinschlüsse hauptsächlich die oberste und damit die in dieser Ausführungsform farblose Schicht betreffen, wird der Farbkontrast nicht beeinträchtigt. Nicht nur Hologramme, sondern auch andere mikrooptische Systeme, z. B. Mikrolinsen, können so vorteilhaft hergestellt werden.

Bei der ersten auf das Substrat aufgebrachten Schicht handelt es sich bevorzugt um eine Effektlackschicht oder um eine flüssigkristalline Schicht. Die Ausrichtung (Alignment) der Flüssigkristalle findet auf dem Substrat oder gegebenenfalls auf einer zusätzlichen Alignmentschicht statt, der Übergang zum isotropen Prägelack kann fließend erfolgen. Bei dieser Anwendung darf z. B. das flüssigkristalline Material auch so formuliert sein, dass es eigentlich eine Inertisierung bei der Vernetzung erfordern würde. Da das flüssigkristalline Material aber unter der Prägelackschicht oder den Prägelackschichten angeordnet ist, entfällt diese Bedingung, weil ein Sauerstoffzutritt ausgeschlossen ist.

Dieser Vorteil ergibt sich natürlich auch für andere Schichten, die unter der obersten Schicht angeordnet sind. Beispielsweise kann dadurch auch die Photoinitiatormenge minimiert werden, da nur die oberste Schicht an Luft aushärten muss. Dies ist vorteilhaft im Hinblick auf Migrationsprozesse.

Sofern die erste Schicht als flüssigkristalline Schicht ausgebildet ist, handelt es sich bevorzugt um eine doppelbrechende flüssigkristalline Schicht. Die flüssigkristalline Schicht ist dabei mit Vorteil als sogenannte "λ/4"-Schicht ausgebildet. Typischerweise kann eine solche doppelbrechende λ/4-Schicht durch Schichtstärken der (nematischen) Flüssigkristallschicht von ca. 1 µm realisiert werden.

Die flüssigkristalline Schicht kann bei Beaufschlagung mit elektromagnetischer Strahlung aber auch fluoreszieren, insbesondere polarisationsabhängig fluoreszieren. Häufig wird dabei sowohl die Anregung mit elektromagnetischer Strahlung als auch die Fluoreszenz polarisationsabhängig sein.

Besonders vorteilhaft sind des Weiteren flüssigkristalline Schichten, die doppelbrechend sind und zugleich polarisationsabhängig fluoreszieren.

Die Kombination doppelbrechender und/oder fluoreszierender Flüssigkristallschichten mit der zumindest einen geprägten Schicht, z.B. einem Hologramm oder einer sonstigen Beugungsstruktur, erhöht den Fälschungsschutz des Sicherheitselements ganz erheblich. Darüber hinaus ist insbesondere eine polarisationsabhängig fluoreszierende nematische Flüssigkristallschicht in Kombination mit einer geprägten Schicht für den Betrachter außerordentlich ansprechend, da er unterschiedliche polarisationsabhängig fluoreszierende Bereiche eines aus Flüssigkristallmaterial gebildeten Motivs unter Einsatz eines Polarisationsfilters verschiedenfarbig wahrnehmen kann, wenn die unterschiedlichen Flüssigkristallbereiche durch verschiedenfarbige Untergrundschichten hinterlegt sind. Durch Drehung des Polarisationsfilters kann der Betrachter die verschiedenfarbigen Bereiche quasi "ein- und ausschalten".

Bevorzugt im Rahmen der vorliegenden Erfindung sind außerdem Ausführungsformen, bei denen eine oder mehrere Schichten der Beschichtung als Diffraktionsschicht, Klebeschicht, Haftvermittlerschicht und/oder Dekorschicht ausgebildet sind.

Im Sinne der vorliegenden Erfindung reicht es grundsätzlich aus, wenn das Substrat des Sicherheitselements teilweise mit der zumindest zwei Schichten umfassenden Beschichtung ausgestattet ist. Es ist aber auch möglich, das gesamte Sicherheitselement mit der Beschichtung zu versehen.
In einer bevorzugten Ausgestaltung ist das Sicherheitselement in Form eines Sicherheitsbandes ausgebildet, das zur vollständigen oder teilweisen Einbettung in ein Sicherheitspapier oder ein Wertdokument bestimmt ist.

In anderen ebenfalls vorteilhaften Ausgestaltungen ist das Sicherheitselement in Form eines Sicherheitsstreifens, eines Patches oder eines sonstigen flächigen Sicherheitselements ausgebildet.

Gemäß einer weiteren bevorzugten Ausführungsform der vorliegenden Erfindung weist das Sicherheitselement eine Dicke von 1 µm bis 50 µm, bevorzugt eine Dicke von 5 µm bis 20 µm, besonders bevorzugt eine Dicke von rund 12 µm auf. Dabei handelt es sich um die bei der Ausstattung von Wertdokumenten und Sicherheitspapieren mit Sicherheitselementen leicht handhabbaren Dicken der Sicherheitselemente.

Bevorzugt ist das Substrat des erfindungsgemäßen Sicherheitselements flexibel ausgestaltet. Eine Flexibilität des Sicherheitselements ist häufig erwünscht, da auch die mit dem Sicherheitselement ausgestatteten Wertdokumente, wie z. B. Banknoten oder Urkunden, häufig flexibel sind.

Nach einer anderen bevorzugten Ausgestaltung ist das Sicherheitselement zusätzlich mit einem Druckbild, insbesondere mit Positiv- oder Negativmustern oder Positiv- oder Negativzeichen versehen. Das Sicherheitselement kann als weitere Sicherheitsmerkmale auch Fluoreszenzstoffe, Phosphoreszenzstoffe oder magnetische Stoffe enthalten.

Bevorzugt wird als Substrat des erfindungsgemäßen Sicherheitselements eine transparente Kunststofffolie verwendet. Solche Folien haben den Vorteil, dass die Bestrahlung mit UV-Licht durch die Folie hindurch vorgenommen werden kann. So ist beispielsweise eine Folie aus Polyethylenterephthalat (PET) ausgehend vom sichtbaren Bereich im UV-Bereich bis ca. 310 nm transparent. Zur Bestrahlung können daher mit Vorteil handelsübliche UV-Strahler einsetzt werden.

Die als Substrat eingesetzte Kunststofffolie ist bevorzugt monoaxial, besonders bevorzugt biaxial orientiert, was ihre Festigkeit erhöht und ihr polarisierende Eigenschaften verleiht. Als Folienmaterial können neben PET auch viele andere Kunststoffe, wie z. B. Polyethylennaphthalat (PEN), Polyolefine, insbesondere orientiertes Polypropylen (OPP), Polyamide, Polyimide, Kevlar® sowie deren Copolymere und/oder Mischungen eingesetzt werden. Bevorzugt umfasst das Sicherheitselement außerdem zusätzlich wenigstens ein visuell und/oder maschinell prüfbares Sicherheitsmerkmal. Neben den bereits genannten Fluoreszenz-, Phosphoreszenz- und magnetischen Stoffen kommen ferner sämtliche Elemente in Betracht, die visuell und/oder maschinell prüfbar sind, also z. B. optisch variable Interferenzschichtpigmente oder Mikrolinsenanordnungen.

Weitere Ausführungsbeispiele sowie Vorteile der Erfindung werden nachfolgend anhand der Figuren erläutert. Zur besseren Anschaulichkeit wird in den Figuren auf eine maßstabs- und proportionsgetreue Darstellung verzichtet. Es zeigen:
- Fig. 1: eine schematische Darstellung eines Sicherheitselements mit einer aus zwei Schichten bestehenden Beschichtung im Querschnitt;
- Fig. 2: eine schematische Darstellung eines Sicherheitselements mit einer aus drei Schichten bestehenden Beschichtung im Querschnitt;
- Fig. 3: eine schematische Darstellung eines Sicherheitselements mit einem eingeprägten Sicherheitsmerkmal im Querschnitt.

### Beispiel 1: Sicherheitselement mit einer aus zwei Schichten bestehenden Beschichtung

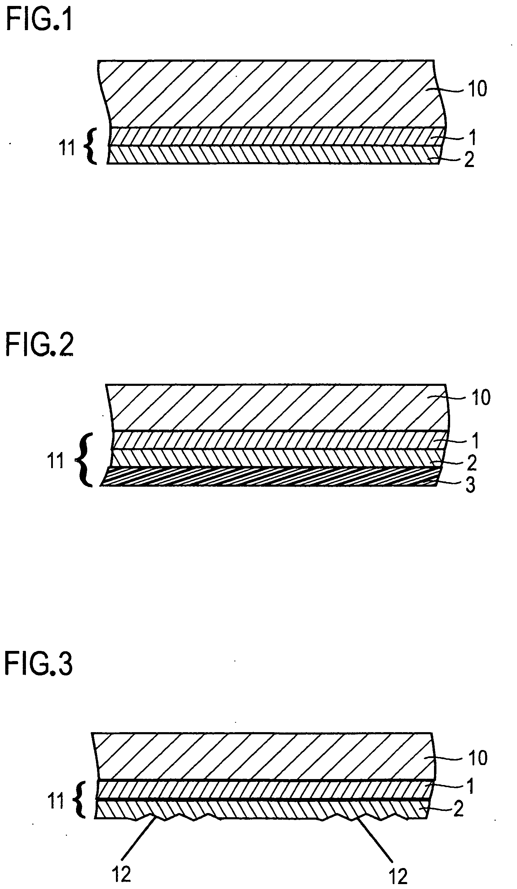

Fig. 1 zeigt im Querschnitt eine schematische Darstellung eines Sicherheitselements mit einer aus zwei Schichten 1, 2 bestehenden Beschichtung 11. Zur Herstellung des Sicherheitselements wird als Schicht 1 eine Schicht aus einem inerten Harz auf ein Substrat 10, im Beispiel auf eine Kunststofffolie 10, aufgetragen. Die Schicht 1 aus inertem Harz kann sehr gut mit einem als Prägelack fungierenden UV-Lack überdruckt werden. Als inerter Lack kann z. B. UCAR™ VMCH (Terpolymer bestehend aus 13 Gew.-% Vinylacetat, 86 Gew.-% Vinylchlorid und 1 Gew.-% Maleinsäure von Dow Chemical Company) verwendet werden, das in organischen Lösungsmitteln löslich und daher leicht haftfest überdruckbar ist. Bei der Kunststofffolie 10 handelt es sich beispielsweise um PET oder OPP.

Ohne zwischenzeitliche Härtung der Schicht 1 wird eine als Prägelack fungierende UV-Dispersion als Schicht 2 aufgetragen. Nach der Prägung der Schicht 2 werden beide Schichten 1, 2 durch Einwirkung von UV-Strahlung vernetzt, wodurch eine unschmelzbare Beschichtung 11 entsteht.

### Beispiel 2: Sicherheitselement mit einer aus drei Schichten bestehenden Beschichtung

Fig. 2 zeigt im Querschnitt eine schematische Darstellung eines Sicherheitselements mit einer aus drei Schichten 1, 2, 3 bestehenden Beschichtung 11. Auf das Substrat 10, im Beispiel auf eine Kunststofffolie 10 aus z. B. PET oder OPP, wird in einem ersten Schritt eine Schicht 1 aufgebracht, die nach der Applikation die Oberfläche des Sicherheitselements bildet. Die Zusammensetzung dieser Schicht lautet:

| Produktname | Hersteller | chemische Bezeichnung / nähere Spezifikation | Anteil/ Gew.-% |
|---|---|---|---|
| Ebecryl™ 83 (Eb 83) | Cytec Surface Specialities | Polyetheracrylatoligomer | 60 |
| TPGDA | Rahn oder Sartomer | Tripropylenglycoldiacrylat | 35 |
| Darocur® 1173 | Ciba Specialty Chemicals | 2-Hydroxy-2-methyl-1-phenyl-propan-l-on | 5 |

Die Kratzfestigkeit dieser Schicht kann durch Wachse und nanoskalige Additive, z. B. SiO₂, erhöht werden. Der Einsatz inerter Harze in dieser Schicht kann später die Überdruckbarkeit vorteilhaft beeinflussen, da zumindest diese Komponenten von der Druckfarbe angelöst werden können. Als inerte Harze kommen z. B. die auf S. 197, Table XXIX, "Saturated Resins that can be utilised in UV Formulations", Volume II, Prepolymers & Reactive Diluents, Chemistry & Technology of UV & EB Formulation for Coatings, Inks & Paints, Wiley, 2nd Edition, ISBN 0471978914 genannten Rohstoffe infrage. Bei Einsatz inerter Harze muss entsprechend der Reaktivverdünneranteil erhöht werden, um eine verarbeitbare Viskosität zu erhalten.

Ohne zwischenzeitliche Härtung der beschriebenen ersten Schicht 1 wird eine Schicht 2 als hochflexible Zwischenschicht aufgebracht. Die Zusammensetzung dieser Schicht lautet:

| Produktname | Hersteller | chemische Bezeichnung/ nähere Spezifikation | Anteil/ Gew.-% |
|---|---|---|---|
| Ebecryl™ 270 (Eb 270) | Cytec Surface Specialities | Urethanacrylatoligomer (aliphatisch) | 25 |
| Ebecryl™ 265 (Eb 265) | Cytec Surface Specialities | Urethanacrylatoligomer (aliphatisch, trifunktional) | 30 |
| Genomer 1122 | Rahn | Urethanacrylat (monofunktional) | 40 |
| Darocur® 1173 | Ciba Specialty Chemicals | 2-Hydroxy-2-methyl-1-phenyl-propan-l-on | 5 |

Diese hochflexible Zwischenschicht enthält also hauptsächlich monofunktionelle und difunktionelle Rohstoffe. Urethanacrylate erzeugen in der Regel eine sehr hohe Flexibilität der Zwischenschicht. Die Flexibilität und Viskosität der Schicht 2 kann innerhalb gewisser Grenzen durch die Mengenverhältnisse von Eb 270 zu Eb 265 gesteuert werden. Eine höhere Vernetzung kann erhalten werden, wenn Genomer 1122 durch TPGDA ersetzt wird. Grundsätzlich kann die Viskosität durch Erhöhung der Anteile an Reaktivverdünner gesenkt werden.

Ohne zwischenzeitliche Härtung der beschriebenen zweiten Schicht 2 wird die zu prägende und später zu metallisierende Schicht 3 aufgebracht. Die Zusammensetzung der Schicht 3 lautet:

| Produktname | Hersteller | chemische Bezeichnung/ nähere Spezifikation | Anteil/ Gew.-% |
|---|---|---|---|
| Ebecryl™ 130 (Eb 130) | Cytec Surface Specialities | Tricyclodecandimethanoldiacrylat | 25,0 |
| Sartomer 238 (HDDA) | Sartomer | 1,6-Hexandioldiacrylat | 10,0 |
| Miramer 600 (DPHA) | Rahn | Dipentaerithritholhexacrylat | 5,0 |
| Ebecryl™ 220 (Eb 220) | Cytec Surface Specialities | Urethanacrylatoligomer (arometisch, hexafunktional) | 40,0 |
| Ebecryl™ 83 (Eb 83) | Cytec Surface Specialities | Polyetheracrylatoligomer (multifunktional) | 11,8 |
| Darocur® 1173 | Ciba Specialty Chemicals | 2-Hydroxy-2-methyl-1-phenyl-propan-l-on | 8,0 |
| Irgacure™ 369 (IR 369) | Ciba Specialty Chemicals | 2-Benzyl-2-dimethylamino-1-(4-morpholinophenyl)-butanon | 0,2 |

Durch die Verwendung multifunktioneller Verbindungen (Eb 220, hexafunktionelles DPHA) wird eine starke Vernetzung erreicht. Der durch die starke Vernetzung verursachte Schrumpf und der Einsatz von HDDA erleichtern den Release aus dem Prägewerkzeug.

Für den beschriebenen Schichtaufbau ist noch anzumerken, dass zwar primär Schicht 3 mit der Prägestruktur versehen wird, aufgrund der durch die Prägung in gewissen Umfang verursachten Fließvorgänge der nicht oder nicht vollständig gehärteten Schichten 1 und 2 aber auch die Schichten 1 und/oder 2 in gewissen Ausmaß mit der Prägestruktur versehen sein können.

Dabei wird die Prägestruktur in den Schichten 1 und 2 umso stärker ausgeprägt sein, je tiefer die Prägestruktur im Verhältnis zu der Summe der Schichtdicken der Schichten 1 bis 3 ist.

### Beispiel 3: Sicherheitselement mit einer aus drei Schichten bestehenden Beschichtung

Fig. 2 zeigt im Querschnitt eine schematische Darstellung eines Sicherheitselements mit einer aus drei Schichten 1, 2, 3 bestehenden Beschichtung 11. Auf das Substrat 10, im Beispiel auf eine Kunststofffolie 10 aus z. B. PET oder OPP, wird in einem ersten Schritt die Schicht 1 aufgebracht, die nach der Applikation die Oberfläche des Sicherheitselements bildet. Die Zusammensetzung dieser Schicht lautet:

| Produktname | Hersteller | chemische Bezeichnung/ nähere Spezifikation | Anteil/ Gew.-% |
|---|---|---|---|
| Cyracure™ UVR-6110 | Dow Chemical Company | Epoxidharz (cycloaliphatisch) | 77,0 |
| Castor Oil | Gustav Heess Oleochemische Erzeugnisse GmbH | Rizinusöl | 11,0 |
| n-Propanol | OXEA Deutschland | n-Propanol | 5,0 |
| UVI-6992 | Dow Chemical Company | Mischung aus Triarylsulfoniumhexafluorophosphat-Salzen und Propylencarbonat | 7,0 |

Ohne zwischenzeitliche Härtung der beschriebenen ersten Schicht 1 wird eine Schicht 2 als flexible Zwischenschicht aufgebracht. Die Zusammensetzung dieser Schicht lautet:

| Produktname | Hersteller | chemische Bezeichnung/ nähere Spezifikation | Anteil/ Gew.-% |
|---|---|---|---|
| Cyracure™ UVR-6110 | Dow Chemical Company | Epoxidharz (cycloalipathisch) | 81,0 |
| UVI-6992 | Dow Chemical Company | Mischung aus Triarylsulfoniumhexafluorophosphat-Salzen und Propylencarbonat | 9,0 |
| DVE-3 | BASF Corporation | Triethylenglycoldivinylether | 10,0 |

Alternativ weist die flexible Zwischenschicht 2 folgende Zusammensetzung auf:

| Produktname | Hersteller | chemische Bezeichnung/ nähere Spezifikation | Anteil/ Gew.-% |
|---|---|---|---|
| Cyracure™ UVR-6128 | Dow Chemical Company | Epoxidharz (cycloaliphatisch) | 69,0 |
| UVI-6992 | Dow Chemical Company | Mischung aus Triarylsulfoniumhexafluorophosphat-Salzen und Propylencarbonat | 4,0 |
| TONE™ 0305 | Dow Chemical Company | Polyol (trifunktional) | 27,0 |

Ohne zwischenzeitliche Härtung der beschriebenen zweiten Schicht 2 wird die zu prägende und später zu metallisierende Schicht 3 aufgebracht. Die Zusammensetzung der Schicht 3 lautet:

| Produktname | Hersteller | chemische Bezeichnung/ nähere Spezifikation | Anteil/ Gew.-% |
|---|---|---|---|
| Cyracure™ UVR-6110 | Dow Chemical Company | Epoxidharz (cycloalipathisch) | 60,0 |
| TMPO® | Perstorp Specialty Chemicals AB | Trimethylolpropanoxetan | 20,0 |
| Boltorn H2004 | Perstorp Specialty Chemicals AB | dendritisches Polymer mit hoher Hydroxylfunktionalität | 16,0 |
| Irgacure® 250 | Ciba Specialty Chemicals | Idonium, (4-Methylphenyl)[4-(2-methylpropyl)phenyl]-, hexafluorophosphat | 3,5 |
| Genocure™ ITX | Rahn | Isopropylthioxanthon | 0,5 |

Die beschriebenen kationisch härtenden Beschichtungen können mit radikalisch härtenden Systemen kombiniert werden. Vorteilhaft ist es für die Zwischenhaftung, wenn Prepolymere, Reaktivverdünner oder Photoinitiatoren mit freier OH-Funktionalität vorhanden sind, wie z. B. Epoxidacrylate, Pentaerithritoltriacrylat, Dipentaerithritolpentaacrylat und alpha-Hydroxyketone. Auch können vorteilhafterweise Photoinitiatoren, wie z. B. Darocur® 1173, vorhanden sein.

### Beispiel 4: Sicherheitselement mit einer aus zwei Schichten bestehenden Beschichtung

Fig. 3 zeigt im Querschnitt eine schematische Darstellung eines Sicherheitselements mit einer aus zwei Schichten 1, 2 bestehenden Beschichtung 11. Mögliche Zusammensetzungen der Schichten 1 und 2 sind vorstehend bei den Beispielen 1, 2 und 3 beschrieben. In die Schicht 2 wird eine Beugungsstruktur 12 eingeprägt. Anschließend erfolgt die Härtung der Beschichtung 11 durch Einwirkung von UV-Strahlung. Die Belichtung kann dabei auch durch eine Maske hindurch vorgenommen werden.

## Patentansprüche

1. Verfahren zur Herstellung eines Sicherheitselements, nämlich in Form eines Sicherheitsbandes, eines Sicherheitsstreifens oder eines Patches, für ein Sicherheitspapier, Wertdokument oder dergleichen mit einem Substrat (10), wobei das Substrat (10) zumindest teilweise mit einer zumindest zwei Schichten umfassenden Beschichtung (11) ausgestattet ist, mit den Schritten
a) Aufbringen einer ersten Schicht (1) auf das Substrat,
b) Aufbringen von zumindest einer zweiten Schicht (2) auf die erste Schicht (1), wobei vor dem Aufbringen der zweiten Schicht (2) keine vollständige Härtung der ersten Schicht (1) erfolgt,
c) Prägen von zumindest einer Schicht der Beschichtung (11),
d) Härten der Beschichtung (11),
wobei im Schritt c) eine Mikrostruktur (12), nämlich eine Struktur mit einem optisch variablen Effekt, eingeprägt wird, in zumindest einer Schicht der Beschichtung zumindest ein Photoinitiator enthalten ist, in allen Schichten der Beschichtung (11) jeweils zumindest eine strahlenvernetzbare Komponente enthalten ist und die strahlenvernetzbaren Komponenten durch ultraviolette Strahlung oder durch einen Elektronenstrahl vernetzbar sind und das Härten der Schichten durch ultraviolette Strahlung und/oder durch Elektronenstrahlung erfolgt.

2. Verfahren nach Anspruch 1, **dadurch gekennzeichnet, dass** in Schritt b) eine dritte Schicht (3) auf die zweite Schicht (2) aufgebracht wird, wobei vor dem Aufbringen der dritten Schicht (3) keine vollständige Härtung der zweiten Schicht (2) erfolgt.

3. Verfahren nach Anspruch 2, **dadurch gekennzeichnet, dass** in Schritt b) nach dem Aufbringen der dritten Schicht (3) weitere Schichten über der dritten Schicht (3) aufgebracht werden, wobei vor dem Aufbringen der einzelnen Schichten keine vollständige Härtung der jeweils zuvor aufgebrachten Schicht erfolgt.

4. Verfahren nach wenigstens einem der Ansprüche 1 bis 3, **dadurch gekennzeichnet, dass** in Schritt b) vor dem Aufbringen der zweiten Schicht (2) keine Härtung der ersten Schicht (1) erfolgt.

5. Verfahren nach wenigstens einem der Ansprüche 2 bis 4, **dadurch gekennzeichnet, dass** in Schritt b) vor dem Aufbringen der dritten Schicht (3) keine Härtung der zweiten Schicht (2) erfolgt.

6. Verfahren nach wenigstens einem der Ansprüche 1 bis 5, **dadurch gekennzeichnet, dass** vor dem Prägen keine Härtung der aufgebrachten Schichten erfolgt.

7. Verfahren nach wenigstens einem der Ansprüche 1 bis 5, **dadurch gekennzeichnet, dass** vor dem Prägen eine teilweise Härtung lediglich der obersten Schicht erfolgt.

8. Verfahren nach wenigstens einem der Ansprüche 1 bis 7, **dadurch gekennzeichnet, dass** das Aufbringen der Schichten durch ein oder mehrere Verfahren, ausgewählt aus der Gruppe, bestehend aus Walzenbeschichtungsverfahren, Spaltbeschichtungsverfahren, Drahtrakelbeschichtungsverfahren, Slot Die Coating, Dip Coating, Spray Coating, Curtain Coating, Air Knife Coating und Druckverfahren, insbesondere Tiefdruck, Flexodruck oder Offsetdruck,erfolgt.

9. Verfahren nach wenigstens einem der Ansprüche 1 bis 8, **dadurch gekennzeichnet, dass** im Schritt c) ein Hologramm oder eine hologrammähnliche Beugungsstruktur eingeprägt wird.

10. Verfahren nach einem der Ansprüche 1 bis 9, **dadurch gekennzeichnet, dass** in allen Schichten der Beschichtung (11) jeweils zumindest ein Photoinitiator enthalten ist.

11. Verfahren nach wenigstens einem der Ansprüche 1 bis 10, **dadurch gekennzeichnet, dass** das Substrat (10) eine transparente Kunststofffolie aufweist.

12. Verfahren nach wenigstens einem der Ansprüche 1 bis 11, **dadurch gekennzeichnet, dass** es sich bei der ersten Schicht (1) um eine Effektlackschicht oder eine flüssigkristalline Schicht handelt.

13. Verfahren nach wenigstens einem der Ansprüche 1 bis 12, **dadurch gekennzeichnet, dass** die Beschichtung (11) zumindest eine Trennschicht umfasst.

14. Verfahren nach Anspruch 13, **dadurch gekennzeichnet, dass** es sich bei der Trennschicht um die erste auf das Substrat (10) aufgebrachte Schicht handelt.

## Claims

1. A method for manufacturing a security element, specifically in the form of a security band, a security strip or a patch for a security paper, value document or the like, having a substrate (10), the substrate (10) being at least partially furnished with a coating (11) comprising at least two layers, having the steps
a) applying a first layer (1) to the substrate,
b) applying at least a second layer (2) to the first layer (1), with the first layer (1) not being completely cured prior to applying the second layer (2),
c) embossing at least one layer of the coating (11),
d) curing the coating (11),
wherein, in step c), a microstructure (12), specifically a structure having an optically variable effect, is embossed, at least one photoinitiator is included in at least one layer of the coating, at least one radiation-crosslinkable component is included in each case in all layers of the coating (11) and the radiation-crosslinkable components are crosslinkable by ultraviolet radiation or by an electron beam and the layers are cured by ultraviolet radiation and/or by electron radiation.

2. The method according to claim 1, **characterized in that,** in step b), a third layer (3) is applied to the second layer (2), with the second layer (2) not being completely cured prior to applying the third layer (3).

3. The method according to claim 2, **characterized in that,** in step b), after applying the third layer (3), further layers are applied over the third layer (3), with the previously applied layer in each case not being completely cured prior to applying the individual layers.

4. The method according to at least one of claims 1 to 3, **characterized in that,** in step b), the first layer (1) is not cured prior to applying the second layer (2).

5. The method according to at least one of claims 2 to 4, **characterized in that,** in step b), the second layer (2) is not cured prior to applying the third layer (3).

6. The method according to at least one of claims 1 to 5, **characterized in that** the applied layers are not cured prior to embossing.

7. The method according to at least one of claims 1 to 5, **characterized in that** only the topmost layer is partially cured prior to embossing.

8. The method according to at least one of claims 1 to 7, **characterized in that** the layers are applied through one or more methods selected from the group consisting of roll coating methods, slot coating methods, wire-bar coating methods, slot-die coating, dip coating, spray coating, curtain coating, air knife coating and printing methods, especially intaglio, flexo printing or offset printing.

9. The method according to at least one of claims 1 to 8, **characterized in that,** in step c), a hologram or a hologram-like diffraction structure is embossed.

10. The method according to one of claims 1 to 9, **characterized in that** at least one photoinitiator in each case is included in all layers of the coating (11).

11. The method according to at least one of claims 1 to 10, **characterized in that** the substrate (10) comprises a transparent plastic foil.

12. The method according to at least one of claims 1 to 11, **characterized in that** the first layer (1) is a special-effect lacquer layer or a liquid crystal layer.

13. The method according to at least one of claims 1 to 12, **characterized in that** the coating (11) comprises at least one release layer.

14. The method according to claim 13, **characterized in that** the release layer is the first layer applied to the substrate (10).

## Revendications

1. Procédé, destiné à fabriquer un élément de sécurité, à savoir sous la forme d'une bande de sécurité, d'un ruban de sécurité ou d'un patch, pour un papier de sécurité, un document de valeur ou similaires, pourvu d'un substrat (10), le substrat (10) étant équipé au moins partiellement d'un revêtement (11) comprenant au moins deux couches, avec les étapes consistant à
a) appliquer une première couche (1) sur le substrat,
b) appliquer au moins une deuxième couche (2) sur la première couche (1), aucun durcissement complet de la première couche (1) n'ayant lieu avant l'application de la deuxième couche (2),
c) gaufrer au moins une couche du revêtement (11),
d) faire durcir le revêtement (11),
dans l'étape c) étant gaufrée une microstructure (12), à savoir une structure faisant preuve d'un effet optique variable, dans au moins une couche du revêtement étant contenu au moins un photo-initiateur, dans toutes les couches du revêtement (11) étant contenu respectivement au moins un composant réticulable par rayonnement et les composants réticulables par rayonnement étant réticulables par un rayonnement ultraviolet ou par un faisceau d'électrons et le durcissement des couches s'effectuant par rayonnement ultraviolet et/ ou par rayonnement d'électrons.

2. Procédé selon la revendication 1, **caractérisé en ce que** dans l'étape b) on applique une troisième couche (3) sur la deuxième couche (2), aucun durcissement complet de la deuxième couche (2) n'ayant lieu avant l'application de la troisième couche (3).

3. Procédé selon la revendication 2, **caractérisé en ce que** dans l'étape b), après l'application de la troisième couche (3), on applique des couches additionnelles sur la troisième couche (3), aucun durcissement complet des couches précédemment appliquées n'ayant lieu avant l'application des couches individuelles.

4. Procédé selon au moins l'une quelconque des revendications 1 à 3, **caractérisé en ce que** dans l'étape b), aucun durcissement de la première couche (1) n'a lieu avant l'application de la deuxième couche (2).

5. Procédé selon au moins l'une quelconque des revendications 2 à 4, **caractérisé en ce que** dans l'étape b), aucun durcissement de la deuxième couche (2) n'a lieu avant l'application de la troisième couche (3).

6. Procédé selon au moins l'une quelconque des revendications 1 à 5, **caractérisé en ce qu'**aucun durcissement des couches appliquées n'a lieu avant le gaufrage.

7. Procédé selon au moins l'une quelconque des revendications 1 à 5, **caractérisé en ce qu'**un durcissement partiel d'uniquement la couche supérieure a lieu avant le gaufrage.

8. Procédé selon au moins l'une quelconque des revendications 1 à 7, **caractérisé en ce que** l'application des couches a lieu par un ou plusieurs procédés, sélectionnés dans le groupe constitué du procédé de revêtement au rouleau,, du procédé de revêtement par trempé et un laminage du procédé de revêtement par râcle, du Slot Die Coating, du Dip Coating, du Spray Coating, du Curtain Coating, de l'Air Knife Coating et des procédés d'impression, notamment l'héliogravure, la flexographie ou l'impression offset.

9. Procédé selon au moins l'une quelconque des revendications 1 à 8, **caractérisé en ce que** dans l'étape c), on gaufre un hologramme ou une structure de diffraction analogue à un hologramme.

10. Procédé selon l'une quelconque des revendications 1 à 9, **caractérisé en ce que** dans toutes les couches du revêtement (11) est contenu respectivement au moins un photo-initiateur.

11. Procédé selon au moins l'une quelconque des revendications 1 à 10, **caractérisé en ce que** le substrat (10) comporte un film en matière plastique transparente.

12. Procédé selon au moins l'une quelconque des revendications 1 à 11, caractérisé en ce la première couche (1) est une couche de peinture à effet ou une couche cristalline liquide.

13. Procédé selon au moins l'une quelconque des revendications 1 à 12, **caractérisé en ce que** le revêtement (11) comprend au moins une couche séparatrice.

14. Procédé selon la revendication 13, **caractérisé en ce que** la couche séparatrice est la première couche appliquée sur le substrat (10).
